# DEMANDE DE BREVET EUROPEEN

(11) **EP 4 216 082 A1**
(43) Date de publication de la demande: **26.07.2023**
(21) Numéro de dépôt: 22214730.8
(22) Date de dépôt: 19.12.2022
(51) Int. Cl.: G06F 21/32, G06V 40/12

(54) **PROCÉDÉ DE MISE EN CORRESPONDANCE D'UNE IMAGE D'UNE PAUME D'UN INDIVIDU AVEC AU MOINS UNE IMAGE D'UNE PLURALITÉ D'IMAGES DE PAUMES DE RÉFÉRENCE**

(30) Priorité: 21.01.2022 FR 2200504
(71) Demandeur: IDEMIA Identity & Security France, 92400 Courbevoie (FR)
(72) Inventeur: GIRARD, Fantin, 92400 courbevoie (FR); NIAF, Emilie, 92400 Courbevoie (FR); MABYALAHT, Guy, 92400 Courbevoie (FR)
(74) Mandataire: Idemia

(57) **Abrégé**

L'invention concerne un procédé de mise en correspondance d'une image d'une paume d'un individu (i) avec au moins une image d'une pluralité d'images de paumes de référence (iref1-irefZ), qui comprend les étapes suivantes :
- une étape de création d'une base de référence (60) à partir de la pluralité d'images de paumes de référence (iref1-irefZ) comprenant pour chaque image de paume de référence une sélection d'au moins une région de paume de référence et d'un codage en une information biométrique régionale de référence (V11-V1 N, VZ1-VZN),
- une étape de détermination d'une information biométrique palmaire individu (IP) à partir de l'image de la paume de l'individu (i) comprenant une sélection d'au moins une région de paume individu (R1-RM) et de son codage en une information biométrique régionale individu,
- pour chaque image de paume de référence (iref1-irefZ), une étape de comparaison (102) de chaque information biométrique régionale individu (V1-VM) avec chaque information biométrique régionale de référence (V11-V1 N, VZ1-VZN),
- une étape de mise en correspondance de l'image de la paume de l'individu (i) avec au moins une image de la pluralité d'images de paumes de référence (iref, iref1-irefZ), en fonction d'un résultat de la comparaison.

## Description

L'invention concerne le domaine de la reconnaissance biométrique, en particulier de la reconnaissance de paume de main, par la mise en correspondance d'une image de paume d'un individu avec une ou plusieurs images d'une base de référence.

Il est connu de l'état de la technique des méthodes analytiques de reconnaissance de paume de main. Ces méthodes analytiques se basent sur une mise en correspondance de points de minutie. Les résultats des méthodes analytiques ne sont pas toujours satisfaisants. Il est souhaitable de proposer une autre méthode performante capable de consolider une méthode analytique pour augmenter les performances de reconnaissance de paume de main.

Il est connu d'utiliser des réseaux de neurones dans les méthodes de reconnaissance biométrique pour améliorer les performances de reconnaissance. Cependant, une application à une paume entière de main telle qu'il est connu de le faire pour les doigts d'une main n'est pas industrialisable car le temps de traitement serait trop important, la surface d'une paume de main étant bien plus importante que la surface des doigts d'une main. Il est ainsi connu de l'état de la technique des méthodes de reconnaissance de paume de main utilisant des réseaux de neurones, comprenant une étape d'extraction dans une image de paume d'une zone d'intérêt, généralement centrée sur ladite paume. Extraire une zone d'intérêt dans une paume de main permet de réduire le temps de traitement. Cependant, une telle extraction ciblée n'est possible que si la paume dans l'image est une paume entière. Lorsque la paume dans l'image est partielle, il est difficile voire impossible de repérer le centre de la paume et donc d'extraire la zone d'intérêt. Ainsi, les méthodes de l'état de la technique utilisant des réseaux de neurones ne sont pas adaptées à la reconnaissance d'une paume partielle.

L'invention vise à résoudre les problèmes susmentionnés de l'état de la technique en proposant un procédé permettant une mise en correspondance d'une image d'une paume d'un individu avec au moins une image d'une pluralité d'images de paumes de référence, fiable et performante, que l'image de paume de l'individu soit complète ou partielle.

L'invention porte sur un procédé de mise en correspondance d'une image d'une paume d'un individu avec au moins une image d'une pluralité d'images de paumes de référence à l'aide d'un calculateur et d'un encodeur biométrique, le procédé de mise en correspondance comprenant les étapes suivantes :
- une étape de création d'une base de référence à partir de la pluralité d'images de paumes de référence comprenant pour chaque image de paume de référence une étape de sélection par le calculateur d'au moins une région de paume d'une taille prédéfinie appliquée à la paume de référence, dite région de paume de référence, et pour chaque région de paume de référence, une étape de codage en une information biométrique régionale de référence par le codeur biométrique, la base de référence comprenant l'ensemble des informations biométriques régionales de référence de la pluralité d'images de paumes de référence,
- une étape de détermination d'une information biométrique palmaire individu à partir de l'image de la paume de l'individu comprenant l'étape de sélection par le calculateur d'au moins une région de paume appliquée à la paume de l'individu, dite région de paume individu, et pour chaque région de paume individu, l'étape de codage en une information biométrique régionale individu par le codeur biométrique, l'ensemble des informations biométriques régionales individu formant l' information biométrique palmaire individu,
- pour chaque image de paume de référence, une étape de comparaison par le calculateur de chaque information biométrique régionale individu avec chaque information biométrique régionale de référence,
- une étape de mise en correspondance par le calculateur de l'image de la paume de l'individu avec au moins une image de la pluralité d'images de paumes de référence, en fonction d'un résultat de la comparaison.

Selon un aspect de l'invention, l'étape de sélection d'au moins une région de paume comprend une sous étape de sélection par le calculateur d'au moins un point caractéristique de la paume et une sous étape d'extraction par le calculateur d'au moins une région de paume de la taille prédéfinie comprenant ledit au moins un point caractéristique.

Selon un aspect de l'invention, une région de paume est référencée par rapport à au moins un point caractéristique.

Selon un aspect de l'invention, une région de paume est référencée par rapport à un point caractéristique ou par rapport à un barycentre d'une pluralité de points caractéristiques si les points caractéristiques de la pluralité de points caractéristiques se situent les uns par rapport aux autres selon une proximité géographique prédéfinie.

Selon un aspect de l'invention, un point caractéristique est choisi parmi :
- un point de minutie,
- un point de courbure maximal d'un motif palmaire,
- un point de gradient maximal d'un motif palmaire.

Selon un aspect de l'invention, une région de paume est de forme rectangle et la taille prédéfinie est telle que chaque côté du rectangle a une dimension comprise entre un huitième et un douzième d'un côté d'une enveloppe rectangulaire de paume entière tangente à ladite paume.

Selon un aspect de l'invention, l'étape de codage comprend l'utilisation d'un réseau de neurones, une information biométrique régionale comprenant un vecteur issu dudit réseau de neurones.

Selon un aspect de l'invention, l'étape de comparaison comprend pour chaque image de paume de référence, un calcul comportant pour chaque information biométrique régionale de référence associée, une détermination d'un score régional de similarité avec chaque information biométrique régionale individu et une détermination d'un score palmaire de similarité en fonction des scores régionaux de similarité, l'étape de mise en correspondance de l'image de la paume de l'individu étant fonction des scores palmaires de similarité associés aux images de paumes de référence.

Selon un aspect de l'invention, le calcul d'un score palmaire de similarité comprend une somme d'un nombre prédéfini des meilleurs scores régionaux de similarité.

Selon un aspect de l'invention, l'image de la paume de l'individu comprend une paume complète ou partielle, l'étape de mise en correspondance comprenant dans le cas d'une paume complète, une sélection de l'image de référence associée au score palmaire de similarité le plus élevé, et dans le cas d'une paume partielle, une sélection d'un nombre prédéterminé d'images de référence ayant les scores palmaires de similarité les plus élevés.

L'invention porte également sur un produit programme d'ordinateur comprenant les instructions de programme mettant en oeuvre les étapes du procédé de mise en correspondance, lorsque les instructions de programme sont exécutées par un ordinateur.

D'autres avantages et caractéristiques de l'invention apparaîtront à la lecture de la description et des dessins.

La figure 1a représente une main.

La figure 1b représente une image de paume de référence.

La figure 2 illustre une région de paume dans une paume entière.

La figure 3 représente la sélection d'une région de paume par rapport à des points caractéristiques de la paume.

La figure 4 représente une image d'une paume partielle d'un individu.

La figure 5 illustre un système comprenant une base d'informations biométriques palmaires de référence et une information biométrique palmaire d'un individu, en vue de leur mise en correspondance.

La figure 6a illustre les étapes du procédé selon l'invention.

La figure 6b illustre les sous étapes d'une des étapes du procédé selon l'invention.

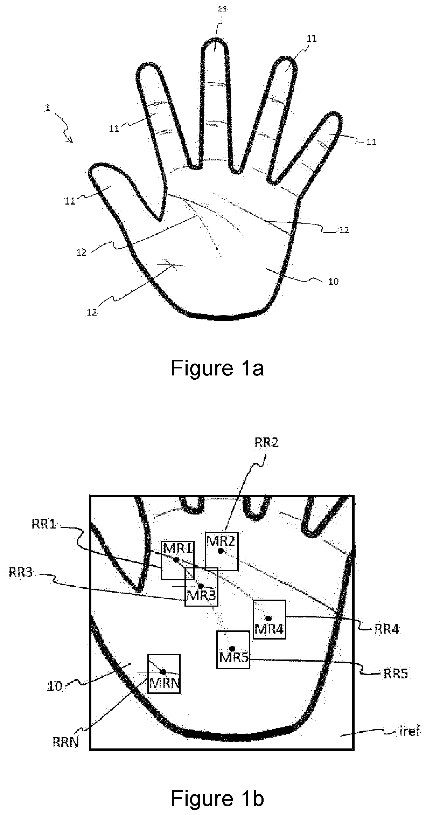

La figure 1a illustre une main 1 d'une personne. La main 1 comprend une paume 10 et cinq doigts 11.

La paume 10 comprend des motifs palmaires 12 faits de sillons et de vallées en forme de boucles, d'arc, de lignes qui peuvent ou non se croiser.

La figure 1b représente une image de paume de référence iref comprenant la paume 10 de la main 1 de la figure 1a.

Une image de paume de référence iref est une image de bonne qualité comprenant une paume 10 de main entière. Une image de paume de référence iref est destinée à la création d'une base de référence.

Sur l'image de paume de référence iref sont représentées six régions de paume de référence RR1, RR2, RR3, RR4, RR5, RRN, chacune centrée sur un point caractéristique MR1, MR2, MR3, MR4, MR5, MRN correspondant.

Une région de paume de référence RR1, RR2, RR3, RR4, RR5, RRN est une région plus petite que la paume de référence, de l'ordre de grandeur d'une phalange d'extrémité d'un doigt qui, à l'instar d'une image phalange d'extrémité de doigt peut être traitée dans un temps raisonnable, pour en extraire une information biométrique.

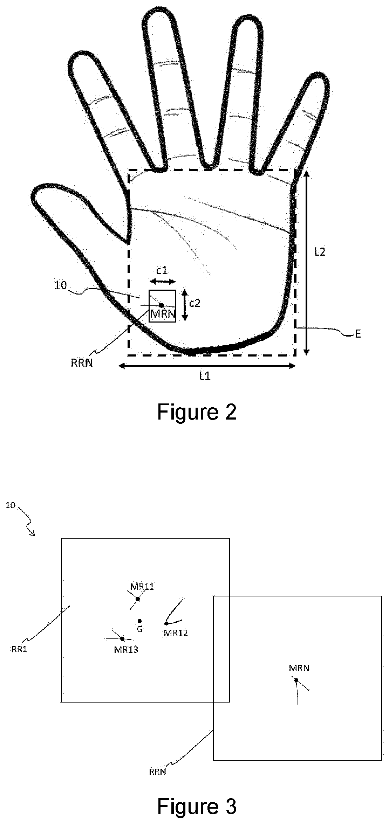

Comme illustré sur la figure 2, une région de paume de référence RRN est avantageusement de forme rectangle et de taille prédéfinie.

Pour définir la taille prédéfinie d'une région de paume de déférence RR1-RRN, on définit tout d'abord une enveloppe E de paume 10 entière. L'enveloppe E est un rectangle. La paume 10 est inscrite dans ladite l'enveloppe E. L'enveloppe E est circonscrite à la paume 10. Les limites de la paume 10 sont tangentes à l'enveloppe E. L'enveloppe E est définie par un petit côté L1 et un grand côté L2. Une enveloppe E est une boîte englobante.

Une région de paume de référence RR1-RRN est rectangulaire et comprend un premier côté c1 et un deuxième côté c2. Par exemple, la taille prédéfinie d'une région de paume de référence RR1-RRN est telle que :
- le premier côté c1 d'une région de paume de référence RR1-RRN a une dimension comprise entre un huitième et un douzième du petit côté L1 de l'enveloppe E,
- le deuxième côté c2 d'une région de paume de référence RR1-RRN a une dimension comprise entre un huitième et un douzième du grand côté L2 de l'enveloppe E.

Par exemple, la taille prédéfinie d'une région de paume de référence RR1-RRN rectangulaire est telle que chaque côté c1, c2 a une dimension comprise entre un huitième et un douzième d'un côté L1, L2 d'une enveloppe rectangulaire de paume entière.

Par exemple, une région de paume de référence RR1-RRN est un carré dont la dimension du côté est comprise entre un huitième et un douzième du grand côté L2 d'une enveloppe rectangulaire de paume entière.

L'ordre de grandeur d'une région de paume RR1-RRN est celle d'une phalange d'extrémité d'un doigt

La taille d'une région de paume de référence RR1-RRN étant prédéfinie, on prendra pour la détermination de la taille de région de paume de référence RR1-RRN les dimensions d'une enveloppe rectangulaire de paume entière d'une main adulte de taille moyenne.

Par exemple, pour une main adulte de taille moyenne, les dimensions d'une enveloppe E sont définis par :
- un petit côté de dimension 1700 pixels,
- un grand côté de dimension 1900 pixels.

Selon cet exemple, on choisit par exemple une région de paume de référence RR1-RRN carrée de côté 256 pixels.

Afin de garantir qu'une information biométrique peut en être extraite, et tel que représenté sur les figures 1b et 2, une région de paume de référence RR1, RR2, RR3, RR4, RR5, RRN contient au moins un point caractéristique MR1, MR2, MR3, MR4, MR5, MRN.

Un point caractéristique MR1-MRN est un point de motif palmaire 12 et est choisi parmi :
- un point de minutie,
- un point de courbure maximal d'un motif palmaire,
- un point de gradient maximal d'un motif palmaire.

Un point de minutie est dans un motif palmaire, un point singulier local, un point d'irrégularité, tel qu'une bifurcation, une terminaison, un îlot, un lac.

Un point de courbure maximal est un point de motif palmaire dont la courbure est maximale dans une zone de par exemple 50x50 pixels. Un point de gradient maximal est un point de motif palmaire dont le gradient est maximal dans une zone de par exemple 50x50 pixels. Le gradient est caractérisé par une valeur moyenne des pixels d'une région de taille prédéterminée.

La figure 3 illustre en outre un cas particulier d'image de paume de référence i comprenant une région de paume de référence RR1 référencée par rapport à une pluralité de points caractéristiques MR11, MR12, MR13, en particulier par rapport à un barycentre G de ladite pluralité de points caractéristiques MR11, MR12, MR13.

En effet, les points caractéristiques de la pluralité de points caractéristiques MR11, MR12, MR13 se situent les uns par rapport aux autres selon une proximité géographique prédéfinie.

Référencer une région de paume RR1 par rapport au barycentre G de ladite pluralité de points caractéristiques MR11, MR12, MR13 évite d'avoir trop de régions de paumes se chevauchant, l'information biométrique extraite sur des zones de chevauchement étant redondante pour les régions de paume de référence associées.

La proximité géographique prédéfinie correspond par exemple à une distance maximale entre les points caractéristiques de la pluralité de points caractéristiques MR11, MR12, MR13 inférieure à 100 pixels.

Une région de paume de référence RRN référencée par rapport à un unique point caractéristique MRN est également illustrée sur la figure 3.

En fonction de la position des points caractéristiques MR1-MR N, M11, M12, M13, certaines portions de régions de paumes de référence peuvent se chevaucher, comme illustrer sur la figure 1b et la figure 3. Le référencement de régions de paumes de référence par rapport à un barycentre dans le cas d'une pluralité de points caractéristiques MR11, MR12, MR13 situés les uns par rapport aux autres selon une proximité géographique prédéfinie, permet de limiter les chevauchements.

Avantageusement, une région de paume de référence RRN est centrée par rapport à un point caractéristique MRN ou par rapport au barycentre G d'une pluralité de points caractéristiques MR11, MR12, MR13.

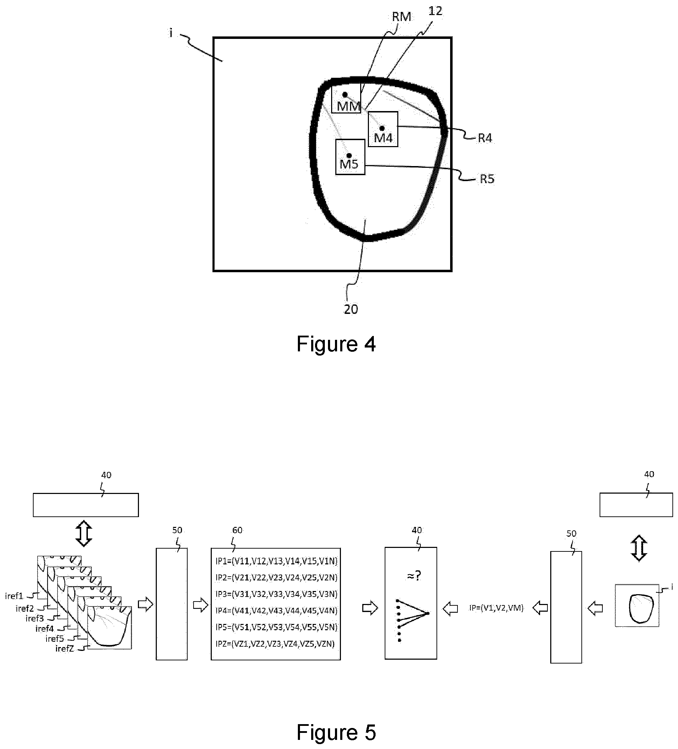

La figure 4 représente une image d'une paume d'un individu i à identifier.

Comme représenté sur la figure 4, une image de paume d'individu i peut être partielle. C'est par exemple une image d'empreinte de paume retrouvée sur une scène d'un délit.

Une telle image de paume d'un individu i peut être entière. C'est par exemple une image de paume issue d'une capture biométrique volontaire.

Sur l'image de paume d'un individu i partielle de la figure 4, trois régions de paume individu R4, R5, RM sont représentées, chacune centrée sur un point caractéristique M4, M5, MM correspondant.

Les régions de paume et les points caractéristiques pour une image de paume d'un individu i sont déterminés de la même manière pour une image de paume de référence iref. Tout ce qui a été décrit précédemment concernant les régions de paume et les points caractéristiques pour l'image de paume de référence iref s'applique de la même manière à l'image de paume d'un individu i.

Ainsi, un point caractéristique sur une image de paume d'individu i a les mêmes caractéristiques et se détermine de la même manière qu'un point caractéristique sur une image de paume de référence iref.

Une région de paume de référence a les mêmes caractéristiques et se détermine de la même manière qu'une région de paume individu. Par exemple la taille d'une région de paume de référence est prédéterminée et est la même que la taille d'une région de paume individu.

Dans le cas particulier de la figure 4 la paume 20 est une paume partielle de la paume 10 de la main 1 de la figure 1a. Ainsi, l'image de paume de référence iref et l'image de paume d'individu i sont des images de la même paume de main 1.

Ainsi, les points caractéristiques M4, M5 de la figure 4 correspondent aux points caractéristiques MR4, MR5 de la figure 1b, puisqu'ils sont déterminés de la même manière que sur la figure 1b. Les autres points caractéristiques MR1, MR2, MR3, MRN appartiennent à une partie de paume de main 1 non visible sur l'image de paume d'individu i et n'ont donc pas de correspondance sur la paume partielle 20.

Un point caractéristique MM est repéré sur l'image de paume d'individu i de la figure 4 alors qu'il n'est pas repéré sur l'image de paume de référence iref de la figure 1b. Cela s'explique par exemple en ce qu'une terminaison de motif palmaire 12 est détectée l'image de paume d'individu i de la figure 4 du fait de la troncature de la paume 20 dans l'image de paume d'individu i.

La figure 5 illustre un système comprenant :
- un calculateur 40,
- une pluralité d'images de paumes de référence iref1-irefZ,
- une image de paume d'individu i,
- un codeur biométrique 50 apte à extraire des informations biométriques palmaires de référence IP1-IPZ à partir de la pluralité d'images de paumes de référence iref1-irefZ, et apte à extraire une information biométrique palmaire individu IP à partir de l'image de la paume d'individu i,
- une base de référence 60 comprenant des informations biométriques palmaires de référence IP1-IPZ extraites de la pluralité d'images de paumes de référence iref1-irefZ,
- une information biométrique palmaire individu IP extraite de l'image de la paume d'individu i.

Du côté gauche de la figure 5 sont représentés le calculateur 40, la pluralité d'images de paumes de référence iref1-irefZ, le codeur biométrique 50 et la base de référence 60.

De côté droit de la figure 5 sont représentés le calculateur 40, l'image de paume d'individu i, le codeur biométrique 50 et l'information biométrique palmaire individu IP.

Le calculateur 40 et le codeur biométrique 50 sont représentés plusieurs fois sur la figure 5 pour faciliter la lisibilité de l'illustration.

La base de référence 60 comprend les informations biométriques palmaires de référence IP1-IPZ associées à la pluralité d'images de paumes de référence iref1-irefZ.

Chaque information biométrique palmaire de référence IP1-IPZ est associée à une image de paume de référence iref1-irefZ.

Chaque image de paume de référence iref1-irefZ comprend au moins une région de paume de référence RR1-RRN référencée par rapport à au moins un point caractéristique MR1-MRN, tel que précédemment décrit en relation avec les figures 1b, 2 et 3.

Chaque information biométrique palmaire de référence IP1-IPZ comprend un ensemble d'informations biométriques régionales de référence V11-V1N, VZ1-VZN. Chaque information biométrique régionale de référence V11-V1N, VZ1-VZN est extraite par le codeur biométrique 50 à partir d'une région de paume RR1-RRN de l'image de paume de référence iref1-irefZ correspondante.

De manière analogue, l'information biométrique palmaire individu IP est associée à une image de paume d'individu i.

L'image de paume d'individu i comprend au moins une région de paume individu R1-RM référencée par rapport à au moins un point caractéristique M1-MM, tel que précédemment décrit en relation avec la figure 4 et par renvoi par analogie aux figures 1b, 2 et 3.

L'information biométrique palmaire individu IP comprend un ensemble d'informations biométriques régionales individu V1-VM. Chaque information biométrique régionale individu V1-VM a été extraite par le codeur biométrique 50 à partir d'une région de paume R1-RM de l'image de paume d'individu i correspondante.

Comme illustré au centre de la figure 5, le calculateur 40 est apte à comparer chaque information biométrique régionale individu V1-VM associée à l'image de paume individu i avec chaque information biométrique régionale de référence V11-V1N, VZ1-VZN associée à chaque image de paume de référence iref1-irefZ.

En fonction de cette comparaison, le calculateur 40 est apte à mettre en correspondance l'image de la paume de l'individu i avec au moins une image de la pluralité d'images de paumes de référence iref1-irefZ.

Avantageusement, le codeur biométrique 50 comprend un réseau de neurones, une information biométrique régionale de référence V11-V1N, VZ1-VZN ou individu V1-VM comprend un vecteur issu dudit réseau de neurones, par exemple un vecteur de taille 128. Ainsi, une information biométrique de référence IP1-IPZ est un ensemble de vecteurs d'information biométrique régionale de référence V11-V1N, VZ1-VZN. De même une information biométrique d'individu IP est un ensemble de vecteurs d'information biométrique régionale individu V1-VM.

Par exemple, le réseau de neurones est de type DenseNet ou ResNet.

Selon une alternative, le codeur biométrique 50 comprend un algorithme analytique.

Il est à noter que le calculateur 40 et le codeur biométrique 50 peuvent être regroupés en une unité de contrôle ou être des dispositifs distincts.

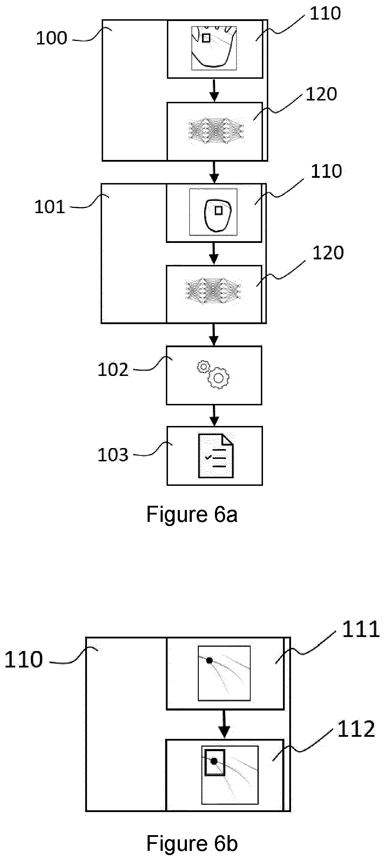

La figure 6a illustre les étapes du procédé de mise en correspondance d'une image d'une paume d'un individu i avec au moins une image d'une pluralité d'images de paumes de référence iref1-irefZ, selon l'invention et en relation avec le système décrit en figure 5.

Le procédé de mise en correspondance selon l'invention comprend une étape de création 100 d'une base de référence 60, le calculateur 40 disposant d'une pluralité d'images de paumes de référence iref1-irefZ.

Avantageusement, la pluralité d'images de paumes de référence iref1-irefZ comprend entre 10000 et 100000 images de paumes de référence iref1-irefZ.

L'étape de création 100 comprend une étape de sélection 110 et une étape de codage 120, appliquée à des paumes 10 de référence dans la pluralité d'images de paumes de référence iref1-irefZ.

Selon l'étape de sélection 110, le calculateur 40 sélectionne pour chaque image de paume de référence iref1-irefZ, au moins une région de paume de référence RR1-RRN, par exemple tel que décrit précédemment, en relation avec les figures 1b, 2 et 3.

Par exemple, comme représenté figure 6b, l'étape de sélection 110 comprend pour chaque image de paume de référence iref1-irefZ:
- une sous étape de sélection 111 dans laquelle le calculateur 40 sélectionne au moins un point caractéristique MR1-MRN de la paume dans l'image de référence iref1-irefZ,
- et une sous étape d'extraction 112 dans laquelle le calculateur 40 extrait au moins une région de paume RR1-RRN de taille prédéfinie comprenant ledit au moins un point caractéristique MR1-MRN.

Une image de paume de référence iref1-irefZ comprend avantageusement une paume 10 de main 1 complète. Sur une telle image de paume de référence iref1-irefZ et selon le procédé de la figure 6b, le calculateur sélectionne en moyenne entre 4 et 15 régions de paume de référence RR1-RRN.

Une paume de référence complète comprend entre 100 et 300 points caractéristiques MR1-MRN.

Selon l'étape de codage 120, le codeur biométrique 50 extrait de chaque région de paume de référence RR1-RRN, une information biométrique régionale de référence V11-V1N, VZ1-VZN.

L'ensemble des informations biométriques régionales de référence V11-V1N, VZ1-VZN associé à une image de paume de référence iref1-irefZ forme une information biométrique palmaire de référence IP1-IPZ.

Le calculateur 40 crée la base de référence 60 en rassemblant les informations biométriques palmaires de référence IP1-IPZ de la pluralité d'images de paumes de référence iref1-irefZ.

Le procédé de mise en correspondance selon l'invention comprend également une étape de détermination 101 d'une information biométrique palmaire individu IP, le calculateur 40 disposant d'une image de paume d'un l'individu i.

L'étape de détermination 101 comprend l'étape de sélection 110 et l'étape de codage 120, déjà mentionnées précédemment, cette fois, appliquées à la paume 20 d'individu de l'image de paume d'individu i.

Selon l'étape de sélection 110, le calculateur 40 sélectionne au moins une région de paume individu R1-RM, par exemple tel que décrit précédemment, en relation avec la figure 4 et par renvoi par analogie aux figures 1b, 2 et 3.

Par exemple, comme représenté figure 6b, l'étape de sélection 110 comprend pour l'image de paume individu i:
- une sous étape de sélection 111 dans laquelle le calculateur 40 sélectionne au moins un point caractéristique M1-MM de la paume dans l'image de paume individu i,
- et une sous étape d'extraction 112 dans laquelle le calculateur 40 extrait au moins une région de paume RR1-RRN de taille prédéfinie comprenant ledit au moins un point caractéristique MR1-MRN.

L'image de paume d'un individu i peut comprendre une paume 20 complète ou partielle d'un main 1 de l'individu.

Dans le cas d'une paume partielle, la sélection d'au moins une région de paume individu R1-RM n'est possible selon le procédé de la figure 6b que si le calculateur détecte au moins un point caractéristique M1-MM.

Selon l'étape de sélection 120, le codeur biométrique 50 extrait de chaque région de paume individu R1-RM, une information biométrique régionale individu V1-VM.

L'ensemble des informations biométriques régionales individu V1-VM forme l'information biométrique palmaire individu IP.

Le procédé de mise en correspondance selon l'invention comprend également une étape de comparaison 102, dans laquelle le calculateur 40 compare chaque information biométrique régionale individu V1-VM avec chaque information biométrique régionale de référence V11-V1N, VZ1-VZN de chaque image de paume de référence iref1-irefZ.

L'étape de comparaison 102 comprend avantageusement pour chaque image de paume de référence iref1-irefZ, un calcul comportant :
- pour chaque information biométrique régionale de référence V11-V1N, VZ1-VZN, une détermination d'un score régional de similarité avec chaque information biométrique régionale individu V1-VM,
- et une détermination d'un score palmaire de similarité en fonction desdits scores régionaux de similarité.

Dans le cas où le codeur biométrique 50 comprend un réseau de neurones et que les informations biométriques régionales de référence V11-V1N, VZ1-VZN et individu V1-VM sont des vecteurs, le score de similarité est issu du résultat d'un calcul de similarité cosinus entre deux vecteurs, déterminé par le produit scalaire des vecteurs divisé par le produit de leurs normes.

Avantageusement, le calcul de score palmaire de similarité comprend une somme d'un nombre prédéfini des meilleurs scores régionaux de similarité.

Par exemple, le calcul de score palmaire de similarité est la somme d'un nombre prédéfini des meilleurs scores régionaux de similarité.

Par exemple, le calcul de score palmaire de similarité est une moyenne d'un nombre prédéfini des meilleurs scores régionaux de similarité.

Par exemple, le calcul de score palmaire de similarité est la somme pondérée d'un nombre prédéfini des meilleurs scores régionaux de similarité, la pondération étant fonction de la qualité des images de paume de référence et individu correspondante, sur les régions de paume concernées.

Le nombre prédéfini est compris avantageusement entre cinq et quinze, par exemple dix.

Un exemple très simplifié est décrit ci-dessous pour illustrer un calcul réalisé par la calculateur 40, avec comme support la figure 5.

L'image de paume d'individu comprend deux régions de référence dont sont extraites par le codeur biométrique 50 deux informations biométriques régionale individu V1, V2.

Une première image de paume de référence iref1 comprend quatre régions de référence dont sont extraites par le codeur biométrique 50 quatre informations biométriques régionale de référence V11, V12, V13, V14.

Le calculateur 40 calcule pour la première image de paume de référence ref1 les scores de similarité régionaux suivants :
- un score de similarité régional S111 associé à l'information biométrique régionale de référence V11 et à l'information biométrique régionale individu V1,
- un score de similarité régional S112 associé à l'information biométrique régionale de référence V12 et à l'information biométrique régionale individu V1,
- un score de similarité régional S113 associé à l'information biométrique régionale de référence V13 et à l'information biométrique régionale individu V1,
- un score de similarité régional S114 associé à l'information biométrique régionale de référence V14 et à l'information biométrique régionale individu V1,
- un score de similarité régional S121 associé à l'information biométrique régionale de référence V11 et à l'information biométrique régionale individu V2,
- un score de similarité régional S122 associé à l'information biométrique régionale de référence V12 et à l'information biométrique régionale individu V2,
- un score de similarité régional S123 associé à l'information biométrique régionale de référence V13 et à l'information biométrique régionale individu V2,
- un score de similarité régional S124 associé à l'information biométrique régionale de référence V14 et à l'information biométrique régionale individu V2.

Le calculateur 40 calcule pour la première image de paume de référence ref1, un premier score palmaire de similarité S100 égal à une somme d'un nombre prédéfini des meilleurs scores régionaux de similarité associés à ladite première image de paume de référence ref1, le nombre prédéfini étant le chiffre cinq pour notre exemple.

Si dans l'ordre décroissant de valeur, les scores régionaux de similarité sont classés comme suit :S111>S112>S113>S114>S121 >S122>S123>S124, alors le premier score palmaire de similarité S100 est calculé comme suit : S100=S111+S112+S113+S114+S121.

Une deuxième image de paume de référence iref2 comprend quatre régions de référence dont sont extraites par le codeur biométrique 50 quatre informations biométriques régionales de référence V21, V22, V23, V24.

Le calculateur 40 calcule pour la deuxième image de paume de référence ref2 les scores de similarité régionaux suivants :
- un score de similarité régional S211 associé à l'information biométrique régionale de référence V21 et à l'information biométrique régionale individu V1,
- un score de similarité régional S212 associé à l'information biométrique régionale de référence V22 et à l'information biométrique régionale individu V1,
- un score de similarité régional S213 associé à l'information biométrique régionale de référence V23 et à l'information biométrique régionale individu V1,
- un score de similarité régional S214 associé à l'information biométrique régionale de référence V24 et à l'information biométrique régionale individu V1,
- un score de similarité régional S221 associé à l'information biométrique régionale de référence V21 et à l'information biométrique régionale individu V2,
- un score de similarité régional S222 associé à l'information biométrique régionale de référence V22 et à l'information biométrique régionale individu V2,
- un score de similarité régional S223 associé à l'information biométrique régionale de référence V23 et à l'information biométrique régionale individu V2,
- un score de similarité régional S224 associé à l'information biométrique régionale de référence V24 et à l'information biométrique régionale individu V2.

Le calculateur 40 calcule pour la deuxième image de paume de référence ref2, un deuxième score palmaire de similarité S200 égal à la somme des cinq meilleurs scores régionaux de similarité associés à ladite deuxième image de paume de référence ref2.

Si dans l'ordre décroissant de valeur, les scores régionaux de similarité sont classés comme suit : S224>S223>S222>S221>S214>S213>S212>S211, alors le deuxième score palmaire de similarité S200 est calculé comme suit : S200=S224+S223+S222+S221+S214.

Une troisième image de paume de référence iref3 comprend cinq régions de référence dont sont extraites par le codeur biométrique 50 cinq informations biométriques régionales de référence V31, V32, V33, V34, V35.

Le calculateur 40 calcule pour la troisième image de paume de référence ref3 les scores de similarité régionaux suivants :
- un score de similarité régional S311 associé à l'information biométrique régionale de référence V21 et à l'information biométrique régionale individu V1,
- un score de similarité régional S312 associé à l'information biométrique régionale de référence V22 et à l'information biométrique régionale individu V1,
- un score de similarité régional S313 associé à l'information biométrique régionale de référence V23 et à l'information biométrique régionale individu V1,
- un score de similarité régional S314 associé à l'information biométrique régionale de référence V24 et à l'information biométrique régionale individu V1,
- un score de similarité régional S315 associé à l'information biométrique régionale de référence V25 et à l'information biométrique régionale individu V1,
- un score de similarité régional S321 associé à l'information biométrique régionale de référence V21 et à l'information biométrique régionale individu V2,
- un score de similarité régional S322 associé à l'information biométrique régionale de référence V22 et à l'information biométrique régionale individu V2,
- un score de similarité régional S323 associé à l'information biométrique régionale de référence V23 et à l'information biométrique régionale individu V2,
- un score de similarité régional S324 associé à l'information biométrique régionale de référence V24 et à l'information biométrique régionale individu V2,
- un score de similarité régional S325 associé à l'information biométrique régionale de référence V25 et à l'information biométrique régionale individu V2.

Le calculateur 40 calcule pour la troisième image de paume de référence ref3, un troisième score palmaire de similarité S300 égal à la somme des cinq meilleurs scores régionaux de similarité associés à ladite troisième image de paume de référence ref3.

Si dans l'ordre décroissant de valeur, les scores régionaux de similarité sont classés comme suit : S325>S324>S323>S322>S321>S315>S314>S313>S312>S311, alors le troisième score palmaire de similarité S300 est calculé comme suit : S300=S325+S324+S323+S322+S321.

Selon cet exemple, fixons que selon un ordre décroissant de valeur, les scores palmaires de similarité sont classés comme suit : S300> S200> S100.

Le procédé de mise en correspondance selon l'invention comprend également une étape de mise en correspondance 103 dans laquelle le calculateur 40 met en correspondance l'image de la paume de l'individu i avec au moins une image de la pluralité d'images de paumes de référence iref1-irefZ, en fonction d'un résultat de la comparaison.

En particulier, l'étape de mise en correspondance 103 de l'image de la paume de l'individu i est fonction des scores palmaires de similarité des informations biométriques palmaires de référence V11-V1N, VZ1-VZN associées aux images de paumes de référence iref1-irefZ.

Dissocions deux cas :
- premier cas : l'image de la paume de l'individu i comprend une paume complète,
- deuxième cas : l'image de la paume de l'individu i comprend une paume partielle.

Dans le cas d'une paume complète, le calculateur 40 sélectionne une image : l'image de référence iref1-irefZ associée au score palmaire de similarité le plus élevé selon l'étape de mise en correspondance 103.

Selon l'exemple très simplifié ci-dessus, le score palmaire de similarité le plus élevé est le troisième palmaire de similarité S300. Le calculateur 40 sélectionne la troisième image de référence iref3.

Dans le cas d'une paume partielle, le calculateur 40 sélectionne un nombre prédéterminé d'images de référence iref1-irefZ ayant les scores palmaires de similarité les plus élevés.

Le nombre prédéterminé est avantageusement compris entre 10 et 150, par exemple 100.

A partir de l'exemple simplifié ci-dessus, appliquons le même principe pour un nombre d'images de paumes de référence iref1-irefZ égal à 10000. Le calculateur 40 calcule alors 10000 scores palmaires de similarité associées aux 10000 images de paumes de référence iref1-irefZ.

Pour un nombre prédéterminé égal à 10, si les dix scores palmaires de similarité sont ceux associés aux images de référence iref1, iref2, iref3, iref4, iref5, iref6, iref7, iref8, iref9, iref10, alors le calculateur 40 sélectionne les images de référence iref1, iref2, iref3, iref4, iref5, iref6, iref7, iref8, iref9, iref10 selon l'étape de mise en correspondance 103.

Le procédé de l'invention permet de mettre en correspondance de manière à la fois fiable et stable, une image d'une paume d'un individu i avec une ou plusieurs images de paumes de référence, même dans le cas où l'image de paume individu i contient une paume partielle.

## Revendications

1. Procédé de mise en correspondance d'une image d'une paume d'un individu (i) avec au moins une image d'une pluralité d'images de paumes de référence (iref1-irefZ) à l'aide d'un calculateur (40) et d'un encodeur biométrique (50), le procédé de mise en correspondance comprenant les étapes suivantes :
- une étape de création (100) d'une base de référence (60) à partir de la pluralité d'images de paumes de référence (iref1-irefZ) comprenant pour chaque image de paume de référence (iref1-irefZ) une étape de sélection (110) par le calculateur (40) d'au moins une région de paume d'une taille prédéfinie appliquée à la paume de référence, dite région de paume de référence (RR1-RRN), et pour chaque région de paume de référence (RR1-RRN), une étape de codage (120) en une information biométrique régionale de référence (V11-V1N, VZ1-VZN) par le codeur biométrique (50), la base de référence (60) comprenant l'ensemble des informations biométriques régionales de référence (V11-V1N, VZ1-VZN) de la pluralité d'images de paumes de référence (iref1-irefZ),
- une étape de détermination (101) d'une information biométrique palmaire individu (IP) à partir de l'image de la paume de l'individu (i) comprenant l'étape de sélection (110) par le calculateur (40) d'au moins une région de paume appliquée à la paume de l'individu, dite région de paume individu (R1-RM), et pour chaque région de paume individu (R1-RM), l'étape de codage (120) en une information biométrique régionale individu (V1-VM) par le codeur biométrique (50), l'ensemble des informations biométriques régionales individu (V1-VM) formant l' information biométrique palmaire individu (IP),
- pour chaque image de paume de référence (iref, iref1-irefZ), une étape de comparaison (102) par le calculateur (40) de chaque information biométrique régionale individu (V1-VM) avec chaque information biométrique régionale de référence (V11-V1N, VZ1-VZN),
- une étape de mise en correspondance (103) par le calculateur (40) de l'image de la paume de l'individu (i) avec au moins une image de la pluralité d'images de paumes de référence (iref1-irefZ), en fonction d'un résultat de la comparaison, **caractérisé en ce que** l'étape de sélection (110) d'au moins une région de paume (RR1-RRN, R1-RM) comprend une sous étape de sélection (111) par le calculateur (40) d'au moins un point caractéristique (MR1-MRN, M1-MM) de la paume et une sous étape d'extraction (112) par le calculateur (40) d'au moins une région de paume (RR1-RRN, R1-RM) de la taille prédéfinie comprenant ledit au moins un point caractéristique (MR1-MRN, M1-MM), la région de paume étant référencée par rapport audit au moins un point caractéristique (MR1-MRN, M1-MM).

2. Procédé de mise en correspondance selon la revendication précédente, une région de paume (RR1-RRN, R1-RM) étant référencée par rapport à un point caractéristique (MR1-MRN, M1-MM) ou par rapport à un barycentre (G) d'une pluralité de points caractéristiques (MR11, MR12, MR13) si les points caractéristiques de la pluralité de points caractéristiques (MR11, MR12, MR13) se situent les uns par rapport aux autres selon une proximité géographique prédéfinie.

3. Procédé de mise en correspondance selon l'une quelconque des revendications 1 ou 2, un point caractéristique (MR1-MRN, M1-MM, M11, M12, M13) étant choisi parmi :
- un point de minutie,
- un point de courbure maximal d'un motif palmaire,
- un point de gradient maximal d'un motif palmaire.

4. Procédé de mise en correspondance selon l'une quelconque des revendications précédentes, une région de paume (RR1-RRN, R1-RM) étant de forme rectangle et la taille prédéfinie étant telle que chaque côté (c1, c2) du rectangle a une dimension comprise entre un huitième et un douzième d'un côté (L1, L2) d'une enveloppe rectangulaire de paume entière tangente à ladite paume.

5. Procédé de mise en correspondance selon l'une quelconque des revendications précédentes, l'étape de codage (120) comprenant l'utilisation d'un réseau de neurones, une information biométrique régionale (V11-V1N, VZ1-VZN, V1-VM) comprenant un vecteur issu dudit réseau de neurones.

6. Procédé de mise en correspondance selon l'une quelconque des revendications précédentes, l'étape de comparaison (102) comprenant pour chaque image de paume de référence (iref, iref1-irefZ), un calcul comportant pour chaque information biométrique régionale de référence (V11-V1N, VZ1-VZN) associée, une détermination d'un score régional de similarité avec chaque information biométrique régionale individu (V1-VM) et une détermination d'un score palmaire de similarité en fonction des scores régionaux de similarité, l'étape de mise en correspondance (103) de l'image de la paume de l'individu (i) étant fonction des scores palmaires de similarité associés aux images de paumes de référence (iref1-irefZ).

7. Procédé de mise en correspondance selon la revendication précédente, le calcul d'un score palmaire de similarité comprenant une somme d'un nombre prédéfini des meilleurs scores régionaux de similarité.

8. Procédé de mise en correspondance selon l'une quelconque des revendications 6 à 7, l'image de la paume de l'individu (i) comprenant une paume complète ou partielle, l'étape de mise en correspondance (103) comprenant dans le cas d'une paume complète, une sélection de l'image de référence (iref1-irefZ) associée au score palmaire de similarité le plus élevé, et dans le cas d'une paume partielle, une sélection d'un nombre prédéterminé d'images de référence (iref1-irefZ) ayant les scores palmaires de similarité les plus élevés.

9. Produit programme d'ordinateur comprenant les instructions de programme mettant en oeuvre les étapes du procédé de mise en correspondance selon l'une quelconque des revendications 1 à 8, lorsque les instructions de programme sont exécutées par un ordinateur.
